(19) Europäisches Patentamt / European Patent Office / Office européen des brevets

(11) **EP 1 468 731 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(21) Anmeldenummer: **03008047.7**

(22) Anmeldetag: **14.04.2003**

(51) Int Cl.:
***B01J 20/18*** (2006.01)   ***B01D 53/04*** (2006.01)

(54) **Verfahren zur Herstellung von verformten Zeolithen und Verfahren zur Entfernung von Verunreinigungen aus einem Gasstrom**

Method for preparing shaped zeolites and method for removing impurities from a gas stream

Procédé de préparation d'un zéolite mis en forme et procédé d'élimination d'impuretés d'un courant gazeux

(84) Benannte Vertragsstaaten:
**AT BE BG CH CY CZ DE DK EE ES FI FR GB GR HU IE IT LI LU MC NL PT SE SI SK TR**

(43) Veröffentlichungstag der Anmeldung:
**20.10.2004 Patentblatt 2004/43**

(73) Patentinhaber: **Zeochem AG**
**8707 Uetikon am See (CH)**

(72) Erfinder:
• **Pfenninger, Armin**
**8707 Uetikon (CH)**
• **Odolo-Hitz, Sonja**
**6300 Zug (CH)**

(74) Vertreter: **Sutter, Kurt et al**
**E. Blum & Co. AG**
**Vorderberg 11**
**8044 Zürich (CH)**

(56) Entgegenhaltungen:
EP-A- 0 940 174        WO-A2-03/061820
DE-B- 1 040 005        DE-B- 1 055 515
US-A- 4 818 508        US-A- 5 856 264
US-A1- 2001 049 998

• PATENT ABSTRACTS OF JAPAN vol. 1999, no. 14, 22. Dezember 1999 (1999-12-22) & JP 11 246282 A (TOSOH CORP), 14. September 1999 (1999-09-14)
• PATENT ABSTRACTS OF JAPAN vol. 2000, no. 11, 3. Januar 2001 (2001-01-03) & JP 2000 211915 A (TOSOH CORP), 2. August 2000 (2000-08-02)
• PATENT ABSTRACTS OF JAPAN vol. 2000, no. 11, 3. Januar 2001 (2001-01-03) & JP 2000 210557 A (TOSOH CORP), 2. August 2000 (2000-08-02)
• FLORIDIN: "Minugel 400", , 11 August 1999 (1999-08-11),
• FLORIDIN: "Acti-Gel TM 208", , 12 December 2000 (2000-12-12),

## Beschreibung

### Technisches Gebiet

Die vorliegende Erfindung betrifft ein Verfahren zur Herstellung eines geformten synthetischen Zeolithen mit dem Gasströme, die Wasserdampf und Kohlendioxid als Verunreinigung enthalten, gereinigt werden können, den Zeolithen selbst und dessen Verwendung zur Gasreinigung. Insbesondere betrifft die Erfindung einen Zeolithen in dem das zeolithische Adsorbens mit einem Binder verformt ist, der hochdispersen Attapulgitbinder umfasst.

### Stand der Technik

Zeolithe sind hydratisierte Aluminosilicate mit der allgemeinen chemischen Formel

$$M_{2/n}O \cdot Al_2O_3 \cdot xSiO_2 \cdot yH_2O$$

wobei
M üblicherweise ein Metall der Alkali- oder Erdalkaligruppe repräsentiert,
n die Valenz des Metalls ist,
x eine Zahl ist, die - je nach Strukturtyp des Zeolithen - zwischen 2 und unendlich variieren kann, und
y schliesslich den hydratisierten Status des Zeolithen bezeichnet.

Die meisten Zeolithe bilden dreidimensionale Kristalle, wobei die Kristalle eine Grösse von 0.1 bis 30 $\mu$m annehmen können. Wenn die Zeolithe erhitzt werden, geben sie kontinuierlich das adsorbierte Wasser ab und es bleibt eine dreidimensionale kristalline Struktur zurück, die Kanäle und Porenöffnungen von molekularer Dimension aufweist. Dies führt zu einer hohen internen Oberfläche, die zur Adsorption von anorganischen und organischen Molekülen geeignet ist. Die Adsorption dieser Moleküle ist nur limitiert durch die Grösse der Kanäle und Porenöffnungen des Zeoliths.

Eine Limitierung in der Anwendung dieser Zeolithe besteht in der Tatsache, dass die Kristalle sehr kleine Partikel bilden. Allfällig natürlich gebildete Agglomerate sind nicht stabil und fallen bei mechanischer Beanspruchung sofort wieder auseinander. Die heute bekannten dynamischen Anwendungen, wie etwa das Trocknen von Erdgas, das Trocknen von Luft, das Abtrennen von Verunreinigungen aus einem Gasstrom, das Trennen von Substanzen eines flüssigen oder gasförmigen Produktstroms, benötigt in der Regel grosse Mengen von Adsorptionsmitteln. Zeolithschüttungen mit diesen kleinen Partikeln können in der Praxis für Adsorptionsanwendungen nicht eingesetzt werden, da der Rückdruck selbst bei kleinen Kolonnen sehr hoch wird. Die Zeolithkristalle werden daher in der Regel mit einem inerten Binder verformt und verfestigt. Dadurch erzielt man Adsorptionssysteme-mit einem sehr viel kleineren Rückdruck.

Ein häufig eingesetzter Binder ist Attapulgit-Ton. Zeolithe, die mit Attapulgit verformt sind werden beispielsweise beschrieben in DE 1 055 515, US 2001/0049998 und EP 0 940 174. US 5,856,264 beschreibt ein Verfahren zur Herstellung eines speziellen verformten Zeolithen, der als Isolation von Fensterscheiben geeignet ist. Gemäss diesem Verfahren wird eine wässrige Attapulgit-Dispersion hergestellt, diese mit dem Zeolithen vermischt und anschliessend versprüht. Diesem Dokument ist weder zu entnehmen, wie ein Attapulgit hochdispers gemacht werden könnte noch welche Eigenschaften ein hochdisperser Attapulgit haben könnte resp. hat.

Die nachveröffentlichte WO 03/061820 offenbart Molekularsieb-Mischungen umfassend Zeolithpulver, beispielsweise Zeolith X oder Zeolith LSX, und als Binder hochdispersen Attapulgit-Binder.

Die Faujasite mit einem Verhältnis von $SiO_2/Al_2O_3$ von 2.3 - 3.0 werden üblicherweise als Zeolith 13X bezeichnet, jene mit einem Verhältnis von $SiO_2/Al_2O_3$ von 2.0 - 2.3 häufig als LSX (Low silica X zeolite), wobei der Übergang von Zeolith LSX zu Zeolith 13X nicht genau festgelegt werden kann. Die Synthese von Zeolith 13X. wurde in U.S. Patent 2'882'244 beschrieben, die Synthese von Zeolith LSX in GB Patent 1'051'621.

Eine frühe Anwendung von synthetischen Faujasiten bestand in der Reinigung von Luft oder anderen Gasgemischen, bevor sie der Tieftemperaturdestillation oder anderen Prozessschritten zugeführt wurden. Die Entfernung von Wasserdampf und von Kohlenstoffdioxid aus Luft ist besonders wichtig, da diese beiden Spurengase bei der Abkühlung kondensieren und gefrieren und dadurch die Tieftemperaturdestillation von Stickstoff und Sauerstoff verunmöglichen. In US 3,078,639 wird die Anwendung von synthetischen Faujasiten für die Reinigung von Luft beschrieben, wobei das Verhältnis $SiO_2/Al_2O_3$ im Faujasiten mit 2.5 $\pm$ 0.5 angegeben wird. Die Anwendung des Zeolithen erfolgte entweder als kristalliner Puder oder als Formkörper, wobei für die Herstellung des Formkörpers ein nicht näher spezifiziertes Bindemittel eingesetzt wurde.

Die Anwendung von synthetischen Faujasiten mit einem $SiO_2/Al_2O_3$-Verhältnis zwischen 2.0 und 2.3 erwies sich als besonders vorteilhaft, weil die Adsorptionskapazität von Kohlenstoffdioxid vor allem bei niedrigen Partialdrucken besonders hoch war. US 5,531,808 belegt die höhere Adsorptionskapazität von Kohlenstoffdioxid an LSX Zeolithen gegenüber einem Zeolith 13X. Besonders vorteilhaft erwiesen sich die Zeolithe, wenn sie in ihrer Natriumform vorliegen. Dieser Aspekt ist in WO 00/01478 ausführlich beschrieben.

Wird im verformten Material ein Teil des Binders in einer nachfolgenden Behandlung mit wässriger Natronlauge in Zeolith LSX umgewandelt, verbessert sich die Adsorptionskapazität des verformten Zeolithen weiter. Zusätzlich lässt sich gemäss WO 99/46031 das adsorbierte Kohlenstoffdioxid bei tieferer Temperatur desorbieren.

WO 01/24923 beschreibt das Verhalten von Zeolithmischungen, die aus Zeolith 13X und Zeolith LSX hergestellt wurden. Das Adsorptionsvermögen dieser Mischungen ist insbesondere bei tiefen Partialdrucken grösser als man aus Berechnungen erwarten würde. Die austauschbaren Kationen können in weiten Grenzen variiert werden.

Die Abtrennung der Verunreinigungen aus dem Gasstrom kann auf verschiedene Art und Weise erfolgen. Wenn Kohlenstoffdioxid und Wasserdampf als Spurenelemente adsorbiert werden sollen, erfolgt die Regenerierung des Adsorptionssystems in der Regel thermisch. Man spricht in diesem Fall von einem TSA Prozess (Temperature Swing Adsorption). Alternativ kann die Adsorption und Regeneration des Adsorptionsbettes auch durch Druckwechsel erfolgen. Dieser Prozess wird dann mit PSA bezeichnet (Pressure Swing Adsorption). Die Abtrennung der Verunreinigungen kann in einer Adsorptionskolonne, die mit einem einzigen Adsorptionsmittel gefüllt ist, erfolgen. Alternativ kann die Adsorptionskolonne mit verschiedenen Lagen von Adsorptionsmitteln gefüllt werden, um einzelne Verunreinigungen nacheinander und selektiv abzutrennen. Mögliche Versuchsanordnungen sind in WO 96/14916, EP 1 092 465 und US 6,106,593 beschrieben.

## Beschreibung der Erfindung

Ziel der vorliegenden Erfindung ist es, den klassischen Prozess, mit dem Kohlenstoffdioxid durch selektive Adsorption aus einem Gasstrom, speziell Luft, entfernt wird, zu verbessern. Neben Kohlenstoffdioxid können auch Wasser und andere anorganische Gase sowie Kohlenwasserstoffe, die auch im Gasstrom vorhanden sein können, ebenfalls selektiv an ein Adsorbens gebunden und entfernt werden. Für eine bestimmte Menge zu reinigender Gase soll eine möglichst kleine Menge Adsorbens eingesetzt werden können. Dadurch können unter anderem die Regenerationszeiten des Adsorbens und damit die Gesamtkosten des Reinigungsprozesses gesenkt werden. Die gereinigten Gase werden in der Regel anschliessend einer kryogenen Destillation unterworfen.

Alle bisherigen Entwicklungen konzentrierten sich auf die Erhöhung der Adsorptionskapazität bei tiefen Partialdrucken von Kohlenstoffdioxid. Um dies zu erreichen, wurde der Zeolith, bzw. die Zeolithmischung optimiert. Es zeigte sich, dass die Faujasite mit einem tieferen Verhältnis von $SiO_2/Al_2O_3$ eine höhere Adsorptionskapazität für Kohlenstoffdioxid aufweisen als jene mit einem höheren Verhältnis von $SiO_2/Al_2O_3$. Zusätzliche Adsorptionskapazität konnte gewonnen werden, wenn ein Teil des Binders in einem separaten Reaktionsschritt in Zeolith umgewandelt wurde. Mit Ausnahme dieses umgewandelten Tonbinders wurde die Rolle des Tonbinders auf den Adsorptionsprozess bei all diesen Arbeiten kaum oder nicht berücksichtigt.

Es hat sich nun gezeigt, dass für die Beurteilung des Adsorptionsprozesses nicht nur die Adsorptionskapazität, sondern auch die Adsorptionskinetik wesentlich ist. Die Adsorptionskinetik wurde bisher bei keinem Verbesserungsvorschlag berücksichtigt. Diese kann mit einer Durchflussapparatur bestimmt werden, wobei einerseits die Durchbruchzeit und andererseits die Massentransferzone bestimmt werden kann. Die Durchbruchzeit bei kleinen Partialdrucken ist dann abhängig von der Adsorptionskapazität und von der Adsorptionskinetik.

Es wurde nun gefunden, dass durch Optimierung der eingesetzten Zeolithe und Tonbinder die Durchbruchzeit für Kohlenstoffdioxid wesentlich erhöht werden kann. Insbesondere die Anwendung eines hochdispersen Attapulgitbinders - auch in kleinen Mengen - auf ein Zeolithsystem von Zeolith 13X und Zeolith LSX führte zu einem Adsorptionsverhalten, das nicht voraussehbar war. Während Zeolithe 13X und LSX bevorzugt sind, lassen sich die Vorteile der Erfindung auch mit anderen Zeolithen des Faujasith-Typs realisieren.

Tonteilchen, insbesondere Attapulgit-Tonteilchen, existieren als dichte Materialien mit sehr beschränkten Adsorptionskapazitäten. Diese herkömmlichen Tonbinderteilchen unterscheiden sich in Grösse und Form von den Zeolithteilchen. Wenn sie mit Zeolithkristallen gemischt werden, neigen sie dazu, Platz zwischen den Zeolithkristallen einzunehmen und sie können zur Adsorption durch das Zeolithmaterial beitragen, ohne die generelle Adsorption der Zeolithmischung zu verbessern. Insbesondere Attapulgit-Tonteilchen liegen nach Gewinnung und Aufbereitung noch in der Form dichter Bündel aus zusammengeklumpten Borsten vor. Solche Bündel konnten mittels Rasterelektronenmikroskopie (REM) bestätigt werden. Damit Attapulgit als Binder für Zeolithteilchen verwendet werden kann, müssen diese Borsten aufgetrennt oder zermahlen werden. Ohne Zermahlen dieser Attapulgit-Tonteilchen auf geringere Grösse entsteht in der Zeolithmischung eine nicht poröse Schicht aus Attapulgit-Tonteilchen, welche die Diffusion der zu adsorbierenden Substanzen durch die Mischung verhindert oder zumindest wesentlich beschränkt. Die bisher verwendeten konventionellen Attapulgit-Tone werden durch Trockenmahlen des Attapulgit-Tons hergestellt. Im herkömmlichen Verfahren werden diese trocken gemahlenen Borstenbündel des Attapulgit-Tons mit den Zeolithkristallen vermischt. Sogar nach dem herkömmlichen Mahlen des Attapulgit-Tons sind immer noch grosse Bündel an Attapulgitborsten vorhanden. Wenn diese konventionell zerkleinerten Attapulgit-Tonbündel mit Zeolith gemischt und zu einem Adsorptionsmittel verformt werden, wird die Fähigkeit des Zeolithmaterials, die gewünschten Adsorbate zu adsorbieren, nicht wesentlich erhöht.

Erfindungsgemäss wird anstelle eines solchen herkömmlichen Tonbindermaterials hochdispergierter Attapulgitton als Binder verwendet.

Unter hochdispersem Attapulgitbinder wird im Rahmen der vorliegenden Erfindung ein gereinigtes Magnesium-Aluminium-Silicat verstanden, das Natriumpolyacrylat als Dispergiermittel enthält und durch chemische Prozesse selbstdispergierend gemacht wurde.

Der Unterschied zwischen herkömmlichem, dichtem Attapulgit-Ton und den hochdispersen Attapulgit-Tonteilchen, die erfindungsgemäss verwendet werden, kann mittels Rasterelektronenmikroskopie gezeigt werden. Ein anderes Verfahren um zwischen herkömmlich dichtem Attapulgit-Ton und den hochdispersen Attapulgit-Tonprodukten zu unterscheiden ist die Schüttdichte, gemessen nach EN ISO 787:1995D. Dichte Attapulgit-Tonbinder enthalten einen Restwassergehalt von 20 bis 25% und sie weisen eine Schüttdichte von 400 g/Liter bis 530 g/Liter auf. Hochdisperse Attapulgitbinder weisen ebenfalls einen Restwassergehalt von etwa 20 bis 25% auf, haben aber eine Schüttdichte von etwa 550 g/Liter bis etwa 700 g/Liter.

Ein anderes Verfahren um zwischen herkömmlichen dichten Attapulgit-Tonen und hochdisperse Attapulgit-Tonprodukten zu unterscheiden ist die Feststellung der Wasseradsorptionskapazität der Attapulgit-Tonprodukte. Um festzustellen, ob der Tonbinder hochdispers ist, wird der Tonbinder bei 50% relativer Feuchte und bei 25°C so lange gesättigt, bis die Gleichgewichtsadsorptionskapazität erreicht worden ist. Dieses Verfahren kann bis zu 72 Stunden dauern. Nach vollständiger Hydratation des Tons wird der Ton bei 550°C während mindestens 2 Stunden getrocknet. Der Unterschied zwischen dem Gewicht des vollständig hydratisierten Tons und dem getrockneten Ton ist die Wasseradsorptionsfähigkeit. Für dichte Attapulgit-Tone liegt die Wasseradsorptionsfähigkeit unter 30%, während diese für hochdisperse Attapulgit-Ton oberhalb 35% beträgt.

Der Herstellungsprozess, dessen Ziel es war andere Tonarten vom Attapulgit abzutrennen, ist in US 6,130,179 beschrieben. Der hochdisperse Attapulgitbinder, der gemäss diesem Verfahren erhältlich ist, enthält hochdisperse Attapulgitfasern, hat eine Schüttdichte gemessen nach EN ISO 787:1995D von mindestens 550 g/L und eine Wasseradsorptionskapazität von über 35 Gew.-%.

## Kurze Beschreibung der Zeichnungen

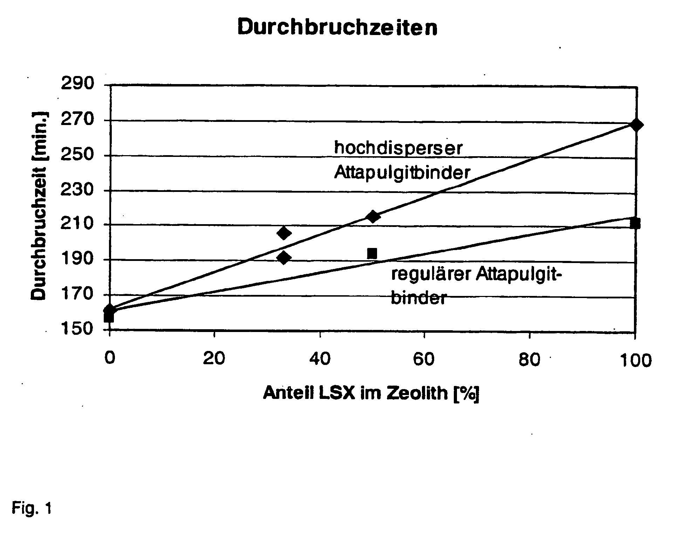

**Figur 1** zeigt die Durchbruchszeiten von Kohlenstoffdioxid in Abhängigkeit des gewählten Binders und der Zeolithzusammensetzung.

## Wege zur Ausführung der Erfindung

Wenn Zeolith 13X durch Zeolith LSX ersetzt wird, kann von einer Verlängerung der Durchbruchzeit ausgegangen werden, da der Zeolith LSX über eine gegenüber Zeolith 13X erhöhte Adsorptionskapazität verfügt. Die Durchbruchzeit für einen Zeolith 13X, der mit einem herkömmlichen Tonbinder hergestellt wurde, beträgt 158 Minuten. Wird der Zeolith 13X durch Zeolith LSX ersetzt, erhöht sich die Durchbruchzeit auf 213 Minuten. Die Erhöhung der Durchbruchzeit beträgt 35 %. In EP 0 930 089 wird ein analoges Experiment beschrieben. Dort wurde beim Ersatz eines Zeolith 13X durch einen Zeolith LSX eine Erhöhung der Durchbruchzeit von 43% ermittelt.

Wird der in diesen Experimenten verwendete herkömmliche Tonbinder durch einen hochdispersen Attapulgitbinder ersetzt, ist die Durchbruchzeit für einen Zeolith 13X nahezu identisch wie für Zeolith 13X mit dem herkömmlichen Binder. Sie beträgt 163 Minuten. Wird der Zeolith 13X stufenweise durch Zeolith LSX ersetzt, erhöht sich die Durchbruchzeit stärker mit dem hochdispersen Binder als mit dem herkömmlichen Binder, nämlich um 67 %, statt der erwarteten 35%. Wird reiner Zeolith LSX eingesetzt, erhöht sich die Durchbruchzeit auf 269 Minuten. Das Resultat wird in der Tabelle und in Figur 1 gezeigt.

Tabelle:

| Durchbruchzeiten in Abhängigkeit des gewählten Binders und der Zeolithzusammensetzung | | | |
|---|---|---|---|
| Versuch Nummer | Anteil LSX im Zeolithgemisch | Hochdisperser Binder Durchbruchzeit in Minuten | konventioneller Tonbinder Durchbruchzeit in Minuten |
| Beispiel 2 und 4 | 0 % | 161 | 158 |
| Beispiel 3 | 33 % | 206 | |
| Beispiel 5 | 33 % | 192 | |
| Beispiel 6 und 9 | 50 % | 216 | 195 |

(fortgesetzt)

| Durchbruchzeiten in Abhängigkeit des gewählten Binders und der Zeolithzusammensetzung | | | |
|---|---|---|---|
| Versuch Nummer | Anteil LSX im Zeolithgemisch | Hochdisperser Binder Durchbruchzeit in Minuten | konventioneller Tonbinder Durchbruchzeit in Minuten |
| Beispiel 7 und 8 | 100 % | 269 | 213 |

Für die in der Tabelle gezeigten Resultate wurden Zeolithe eingesetzt, deren mobile Kationen hauptsächlich Natrium waren. Werden Natriumionen gegen andere Kationen ausgetauscht, entstehen dadurch Adsorptionssysteme, die ebenfalls für die Reinigung von Gasströmen eingesetzt werden können. Als weitere Kationen kommen vor allem Kalium und Calcium in Frage.

Der verformte Zeolith wird mittels eines Verfahrens hergestellt, das sich durch die folgenden Verfahrensschritte auszeichnet:

a) Mischen von (i) mindestens einem Typ Zeolithkristalle aus der Faujasitfamilie mit einem $SiO_2/Al_2O_3$-Verhältnis von 5 3.0 mit (ii) hochdispersem Attapulgitbinder und mindestens einem weiteren Tonbinder, wobei der mindestens eine weitere Tonbinder irgendein für das Verformen von Zeolithen geeigneter Tonbinder und in Mengen von 10 bis 90 % des Binders vorhanden ist, und (iii) Zugabe von Wasser,

oder

mischen von (i) zwei Typen von Zeolithkristallen aus der Faujasitfamilie mit einem SiO2/Al2O3-Verhältnis von ≤ 3.0, wobei die Zeolithkristalle aus der Faujasitfamilie Zeolith LSX und Zeolith 13k sind, wobei die Zeolithtypen 13X und LSX in einem Verhältnis von 90:10 bis 5:95 eingesetzt werden, mit (ii) hochdispersem Attapulgitbinder oder hochdispersem Attapulgitbinder und mindestens einem weiteren Tonbinder und (iii) Zugabe von Wasser,

b) Herstellen von verformten Zeolithkörpern aus der in Schritt a) hergestellten Mischung,

c) Trocknen und Kalzinieren der in Schritt b) verformten Zeolithkörpern um das aktive Adsorptionsmittel zu erhalten,

wobei der hochdisperse Attapulgitbinder dadurch gekennzeichnet ist, dass er ein gereinigtes Magnesium-Aluminium-Silicat ist, das Natriumpolyacrylat als Dispergiermittel enthält, durch chemische Prozesse selbstdispergierend gemacht wurde, und dessen Schüttdichte, gemessen nach EN ISO 787:1995D, grösser als 550 g/L ist.

Nach Schritt c) kann wahlweise ein Ionenaustausch erfolgen.

Die in Schritt a) eingesetzten Zeolith 13X Kristalle und Zeolith LSX Kristalle können nach an und für sich bekannten Verfahren erhalten werden, gegebenenfalls gefolgt von einem Ionenaustauschschritt.

Wird in Schritt a) eine Mischung umfassend verschiedene Zeolithe und/oder hochdispersen Attapulgitbinder und herkömmlichen Binder hergestellt, so können die Zeolithe und die Binder als Einzelkomponenten in Schritt a) eingesetzt werden oder die Zeolithe einerseits und/oder die Binder andererseits können vorgemischt zur Anwendung kommen.

Auch die Herstellung des Attapulgitbinders mit hochdispersen Attapulgitfasern (hochdisperser Attapulgitbinder) und des herkömmlichen Attapulgitbinders oder anderen Tonbinders kann nach bekannten Verfahren erfolgen. Ein geeigneter hochdisperser Attapulgitbinder ist gemäss dem in US 6,130,179 beschriebenen Verfahren erhältlich. Ein solcher Attapulgitbinder enthält nur einen geringen Restgehalt an nicht dispergierten Attapulgitfaserbündeln.

Der Anteil des Binders im fertigen Adsorptionsmittel macht üblicherweise einen Anteil zwischen 2 und 30 Gewichtsprozent aus, vorzugsweise einen Anteil zwischen 5 und 20 Gewichtsprozent.

Der verformte Zeolith kann in beliebiger Form vorliegen, z.B. als Kügelchen, Pillen, Tabletten etc.

Die Kalzinierung erfolgt vorzugsweise bei ca. 600°C während etwa 30 Minuten bis 2 Stunden.

Der im Rahmen dieser Erfindung eingesetzte Zeolith 13X weist üblicherweise ein $SiO_2/Al_2O_3$-Verhältnis von 2.3 - 3.0 auf, vorzugsweise zwischen 2.3 und 2.5 und der eingesetzte Zeolith LSX weist üblicherweise ein $SiO_2/Al_2O_3$-Ver-hältnis von 2.0 - 2.3 auf, vorzugsweise von ca. 2.0.

Die Zeolithe enthalten 75-100 %, vorzugsweise 95-100 % Natrium. Die restlichen Kationen sind mehrheitlich Kalium.

Für spezielle Anwendungen können andere Kationen in Mengen bis zu 95% vorhanden sein. Für die Adsorption von z.B. Lachgas, enthalten geeignete Zeolithe zwischen 60 und 95% Calcium, vorzugsweise jedoch zwischen 75 und 85%, die restlichen Kationen sind mehrheitlich Natrium und Kalium.

Die Zeolithe können zusätzlich mindestens ein weiteres Kation oder mehrere weitere Kationen der Alkalimetalle, der Erdalkalimetalle, der Elemente der Gruppe IIIB oder der Lanthaniden enthalten.

Bevorzugt ist ein Zeolith, der mindestens 10 % LSX enthält. Speziell geeignete Mischungen enthalten von 10 bis 95 % LSX resp. von 90 bis 5 % 13X, insbesondere von 10 bis 90 % LSX resp. von 90 bis 10 % 13X, wobei die Summe aller Zeolithe 100 % beträgt. Auch höhere Anteile LSX, nämlich bis 100 % ergeben sehr gute Durchbruchzeiten.

Als Tonbinder wird ein hochdisperser Attapulgit-Binder alleine oder, bevorzugt, als Mischung mit konventionellen Tonbindern eingesetzt. Ein solcher hochdisperser Attapulgitbinder kann z.B. wie vorne erwähnt selbstdispergierend gemacht werden.

Überraschenderweise wurde festgestellt, dass nur sehr geringe Anteile an hochdispersem Attapulgitbinder notwendig sind, um zusammen mit herkömmlichem Binder eine Verbesserung der Durchbruchzeit zu ergeben, die im Rahmen von hochdispersem Attapulgitbinder alleine liegt. Bereits 10 % hochdisperser Binder resp. 90 % herkömmlicher Binder ergeben eine markante Verbesserung. Deshalb wird erfindungsgemäss vorzugsweise mit Bindermischungen aus 10 - 90 % hochdispersem Attapulgitbinder zusammen mit einem oder mehreren herkömmlichen Bindern gearbeitet, wobei die Summe an hochdispersem Attapulgitbinder und herkömmlichen Bindern 100 % beträgt. Dies ist sowohl aus ökonomischer als auch aus ökologischer Sicht sehr vorteilhaft. Vorzugsweise beträgt der Anteil an herkömmlichem Binder aber maximal 80 %, insbesondere maximal 70 %.

Während der hochdisperse Binder ein Attapulgitbinder ist, kann der herkömmliche Binder irgendein für das Verformen von Zeolithen geeigneter Tonbinder sein, d.h. neben Attapulgit z.B. auch Kaolin, Bentonit, Montmorillonit, Sepiolith und ähnliche resp. Mischungen solcher Tonbinder.

In einer speziellen Ausführungsform wird neben hochdispersem Attapulgitbinder als herkömmlicher Binder Kaolin eingesetzt und nach der Kalzinierung gegebenenfalls in einem Nachbehandlungsschritt zumindest teilweise in Zeolith überführt.

Bei der Verformung können übliche Additive zugegeben werden, insbesondere organische Additive wie porenformende Hilfsstoffe. Zu den porenformenden Hilfsstoffen gehören beispielsweise Fasern wie Rayon, Nylon, Sisal und Flachs, daneben auch organische Polymere, wie Stärke, Stärkederivate, Ligninsulfonate, Polyacrylamide, Polyacrylsäuren, Cellulose und Cellulosederivate. Die Menge der zugefügten porenformenden Substanzen beträgt üblicherweise, bezogen auf das Fertigprodukt, zwischen 2 und 15 Gewichtsprozent.

Die Adsorption der Spurengase erfolgt in einem oder mehreren Adsorbern, die vorzugsweise parallel geschaltet werden. Die beladenen Adsorber werden mit geeigneten Methoden regeneriert. Der Adsorptionsprozess kann entweder im TSA oder im PSA Modus durchgeführt werden, wobei der TSA Modus bevorzugt wird.

Mit dem erfindungsgemässen Adsorptionssystem werden ausserordentlich hohe Adsorptionskapazitäten, verbunden mit kurzen Massentransferzonen, erreicht und damit eine längere Standzeit der Adsorptionssysteme, bevor der Durchbruch von Kohlenstoffdioxid erfolgt.

Neben einem Verfahren zur Herstellung des verformten Zeolithen sind auch ein gemäss diesem Verfahren erhältlicher verformter Zeolith und ein Gasreinigungsverfahren unter Verwendung dieses Zeolithen Gegenstände dieser Erfindung.

Im Verfahren zur Entfernung einer oder mehrerer Verunreinigungen aus einem Gasstrom wird der Gasstrom durch eine Schüttung des erfindungsgemässen zeolithischen Adsorptionsmittels geleitet.

Ein bevorzugter Gasstrom ist ein Luftstrom mit Verunreinigungen, die mittels des erfindungsgemässen Zeolithen aus Gasströmen entfernt werden können. Die Verunreinigungen umfassen Kohlenstoffdioxid, Wasser, Lachgas, ein anderes anorganisches Gas, Kohlenwasserstoffe und Mischungen von zweien oder mehreren dieser Stoffe. Eine Verunreinigung, zu deren Entfernung die erfindungsgemässen Zeolithe speziell geeignet sind, ist Kohlenstoffdioxid. Insbesondere bei Gemischen von Verunreinigungen, die entfernt werden sollen, kann das Bett eine Schüttung aus verschiedenen Zeolithen umfassen, wobei erfindungsgemässe Zeolithe alleine oder in Kombination mit herkömmlichen Zeolithen vorhanden sein können.

Die Erfindung wird nun anhand einiger Beispiele weiter erläutert. Diese Beispiele sollen zur Illustration dienen und die Erfindung in keiner Art und Weise einschränken.

## Beispiele

Die in den Beispielen verwendeten Zeolithpuder wurden von der Firma Zeochem AG, Uetikon, erhalten. Der hochdisperse Attapulgitbinder und der herkömmliche Attapulgitbinder wurden von der Firma ITC Floridin erhalten.

## Beispiel 1

## Synthese des Zeolithen LSX und des Zeolithen 13X

Die Synthese des Zeolithen LSX erfolgt nach einer in der Literatur beschriebenen Methode, zum Beispiel gemäss GB 1'580'928. Das erhaltene Produkt weist ein $SiO_2/Al_2O_3$-Verhältnis von nahe 2.0 auf. Die Kationen bestehen zu 20 - 30% aus Kalium und zu 70 - 80% aus Natrium. Der Zeolith, wie er nach der Synthese anfällt, wird als NaK-LSX bezeichnet. Das Verhältnis der Kationen kann durch einen klassisch durchgeführten Ionenaustausch verändert werden. Wird das synthetisierte Produkt mit Natriumionen behandelt, erhält man einen Zeolith LSX, der Natriumionen bis zu einem Austauschgrad von 99% enthält. Dieser Zeolith wird üblicherweise als Na-LSX bezeichnet. Analog wird verfahren, wenn ein Zeolith mit einem anderen Kation gewünscht wird. Die verschiedenen Kationen üben einen massgeblichen Einfluss auf die Adsorptionskapazität von Kohlenstoffdioxid, Lachgas oder Kohlenwasserstoffen aus.

Die Synthese des Zeolithen 13X erfolgt ebenfalls nach einer in der Literatur beschriebenen Methode, zum Beispiel wie beschrieben in H. Robson "Verified syntheses of zeolitic materials", Elsevier, 2001, S. 150-151.

**Beispiel 2**

**Herstellen von granuliertem Molekularsieb 13X mit herkömmlichem Attapulgitbinder für die Luftreinigung**

(Vergleichsbeispiel)

Eine Mischung von 13X Zeolith Puder, organischen Additiven (Porenbildnern) und einem herkömmlichen Attapulgit-Tonbinder (Binderanteil 16 %) wurde kontinuierlich in einen Granulierteller eingetragen. Während des Granulierprozesses wurde Wasser auf die Pudermischung aufgesprüht, um eine konstante Feuchtigkeit aufrecht zu erhalten, wie sie für die Aufpuderung während des Prozesses benötigt wird. Die Pudermischung wurde mit einer Geschwindigkeit von 500 kg/h zudosiert. Nachdem die ganze Pudermischung eingetragen war, wurden die entstandenen Kugeln während 10 Minuten nachgerollt. Das entstandene Grünkorn wurde auf die Fraktion 1.6 - 2.6 mm ausgesiebt, bei 100°C getrocknet und anschliessend bei 620°C kalziniert. Das kalzinierte und anschliessend abgekühlte Material wurde in luftdicht schliessende Behälter verpackt und analysiert. Die erreichte Durchbruchzeit von Kohlenstoffdioxid betrug 158 Minuten.

**Beispiel 3**

**Herstellen von granuliertem Molekularsieb 13X/LSX mit hochdispersem Binder für die Luftreinigung**

(gemäss Erfindung)

Eine Mischung von Na-LSX Zeolith Puder und 13X Zeolith Puder (gemischt im Verhältnis 33:67), organischen Additiven (Porenbildnern) und einer Mischung aus hochdispersem Attapulgit-Tonbinder mit herkömmlichem Attapulgitbinder (gemischt im Verhältnis 33:67; Binderanteil insgesamt 12 %) wurde kontinuierlich in einen Granulierteller eingetragen. Während des Granulierprozesses wurde Wasser auf die Pudermischung aufgesprüht, um eine konstante Feuchtigkeit aufrecht zu erhalten, wie sie für die Aufpuderung während des Prozesses benötigt wird. Die Pudermischung wurde mit einer Geschwindigkeit von 500 kg/h zudosiert. Nachdem die ganze Pudermischung eingetragen war, wurden die entstandenen Kugeln während 10 Minuten nachgerollt. Das entstandene Grünkorn wurde auf die Fraktion 1.6 - 2.6 mm ausgesiebt, bei 100°C getrocknet und anschliessend bei 620°C kalziniert. Das kalzinierte und anschliessend abgekühlte Material wurde in luftdicht schliessende Behälter verpackt und analysiert. Die erreichte Durchbruchzeit von Kohlenstoffdioxid betrug 206 Minuten.

**Beispiele 4 - 9**

**Herstellen von granuliertem Molekularsieb 13X/LSX mit hochdispersem Binder für die Luftreinigung**

Es wurden Mischungen von Zeolithpudern mit verschiedener Zusammensetzung hergestellt. Diese Mischungen wurden weiter mit organischen Additiven (Porenbildnern) und Tonbindern vermischt und angefeuchtet. 2 kg dieser Mischungen wurden in einem Eirich Intensivmischer R02 granuliert, bis einheitliche Zeolithkugeln entstanden. Das Grünkorn wurde auf eine Kugelgrösse von 1.6 - 2.6 mm ausgesiebt, bei 100°C getrocknet und anschliessend bei 620°C kalziniert. Das kalzinierte und anschliessend abgekühlte Material wurde in luftdicht schliessende Behälter verpackt und analysiert.

Bei Beispiel 4 wurde nur Molekularsieb 13X eingesetzt. Für die Granulierung wurde eine Bindermischung eines hochdispersen Attapulgitbinders und eines herkömmlichen Attapulgitbinders, gemischt im Verhältnis 50:50, eingesetzt (Binderanteil 12 %). Die erreichte Durchbruchzeit betrug 161 Minuten.

Bei Beispiel 5 wurde Molekularsieb 13X und Molekularsieb LSX im Verhältnis 67:33 eingesetzt. Für die Granulierung wurde eine Bindermischung eines hochdispersen Attapulgitbinders und eines herkömmlichen Attapulgitbinders, gemischt im Verhältnis 50:50, eingesetzt (Binderanteil 12 %). Die erreichte Durchbruchzeit betrug 192 Minuten.

Bei Beispiel 6 wurde Molekularsieb 13X und Molekularsieb LSX im Verhältnis 50:50 eingesetzt. Für die Granulierung wurde eine Bindermischung eines hochdispersen Attapulgitbinders und eines herkömmlichen Attapulgitbinders, gemischt im Verhältnis 50:50, eingesetzt (Binderanteil 12 %). Die erreichte Durchbruchzeit betrug 216 Minuten.

Bei Beispiel 7 wurde nur Molekularsieb LSX eingesetzt. Für die Granulierung wurde eine Bindermischung eines hochdispersen Attapulgitbinders und eines herkömmlichen Attapulgitbinders, gemischt im Verhältnis 50:50, eingesetzt (Binderanteil 12 %). Die erreichte Durchbruchzeit betrug 269 Minuten.

Bei Beispiel 8 (Vergleichsbeispiel) wurde nur Molekularsieb LSX eingesetzt. Als Binder wurde ein herkömmlicher Attapulgit eingesetzt (Binderanteil 16 %). Die erreichte Durchbruchzeit betrug 213 Minuten.

Bei Beispiel 9 (Vergleichsbeispiel) wurde Molekularsieb 13X und Molekularsieb LSX im Verhältnis 50:50 eingesetzt. Für die Granulierung wurde ein herkömmlicher Attapulgit eingesetzt (Binderanteil 16 %). Die erreichte Durchbruchzeit betrug 195 Minuten.

**Beispiel 10**

**Bestimmen der Durchbruchzeit**

In ein Adsorptionsgefäss von 30 mm Durchmesser wird das zu analysierende Molekularsieb eingefüllt. Bei einem Druck von 6 x $10^5$ Pa, einer Temperatur von 25°C und einer Durchflussgeschwindigkeit von 2.4 $m^3$/h lässt man gereinigten Stickstoff, der mit 450 ppm Kohlenstoffdioxid versetzt ist, durchströmen. Mit Hilfe eines Infrarotdetektors wird bestimmt, nach welcher Zeit das Kohlenstoffdioxid am Ende des Adsorptionsgefässes erscheint. Dieser Zeitpunkt wird mit Durchbruchzeit bezeichnet und notiert.

Mittels dieses Verfahrens wurden die im Rahmen dieser Erfindung genannten Durchbruchzeiten bestimmt (siehe z.B. Tabelle).

**Patentansprüche**

1. Verfahren zur Herstellung von verformten Zeolithen, **gekennzeichnet durch** die Verfahrensschritte

   a) Mischen von (i) mindestens einem Typ Zeolithkristalle aus der Faujasitfamilie mit einem $SiO_2/Al_2O_3$-Verhältnis von ≤ 3.0 mit (ii) hochdispersem Attapulgitbinder und mindestens einem weiteren Tonbinder, wobei der mindestens eine weitere Tonbinder irgendein für das Verformen von Zeolithen geeigneter Tonbinder und in Mengen von 10 bis 90 % des Binders vorhanden ist, und (iii) Zugabe von Wasser,
   oder Mischen von (i) zwei typen von Zeolithkristallen aus der Faujasitfamilie mit einem SiO2/Al2O3- Verhältnis von ≤ 3.0. wobei die Zeolithkristalle aus der Faujasitfamilie Zeolith LSX und Zeolith 13X sind wobei die Zeolithtypen 13X und LSX in einem Verhältnis von 90:10 bis 5:95 eingesetzt werden, mit (ii) hochdispersem Attapulgitbinder oder hochdispersem Attapulgit-binder und mindestens einem weiteren Tonbinder und (iii) Zugabe von Wasser,
   b) Herstellen von verformten Zeolithkörpern aus der in Schritt a) hergestellten Mischung,
   c) Trocknen und Kalzinieren der in Schritt b) verformten Zeolithkörper, um das aktive Adsorptionsmittel zu erhalten,

   wobei der hochdisperse Attapulgitbinder **dadurch gekennzeichnet ist**, dass er ein gereinigtes Magnesium-Aluminium-Silicat ist, das Natriumpolyacrylat als Dispergiermittel enthält, **durch** chemische Prozesse selbstdispergierend gemacht wurde, und dessen Schüttdichte, gemessen nach EN ISO 787:1995D, grösser als 550 g/L ist.

2. Verfahren gemäss Anspruch 1, **dadurch gekennzeichnet, dass** nach Schritt c) ein Ionenaustausch erfolgt.

3. Verfahren gemäss Anspruch 1 oder 2, **dadurch gekennzeichnet, dass** der Anteil des Binders im fertigen Adsorptionsmittel einen Anteil zwischen 2 und 30 Gewichtsprozent ausmacht.

4. Verfahren gemäss Anspruch 3, **dadurch gekennzeichnet, dass** der Anteil des Binders im fertigen Adsorptionsmittel einen Anteil zwischen 5 und 20 Gewichtsprozent ausmacht.

5. Verfahren gemäss einem der vorangehenden Ansprüche, **dadurch gekennzeichnet, dass** der mindestens eine Typ von Zeolihkristallen aus der Faujasitfamilie Zeolith LSX oder Zeolith LSX und Zeolith 13X ist.

6. Verfahren gemäss einem der vorangehenden Ansprüche, **dadurch gekennzeichnet, dass** in Verfahrensschritt a) (i) die Zeolithkristalle aus der Faujasitfamilie Zeolith LSX und Zeolith 13X sind, wobei die Zeolithtypen 13X und LSX in einem Verhältnis von 90:10 bis 5:95 eingesetzt werden, und (ii) der Binder hochdisperser Attapulgitbinder und mindestens ein weiterer Tonbinder ist, wobei der mindestens eine weitere Tonbinder irgendein für das Verformen von Zeolithen geeigneter Tonbinder und in Mengen von 10 bis 90 % des Binders vorhanden ist.

**7.** Verfahren gemäss einem der vorangehenden Ansprüche, **dadurch gekennzeichnet, dass** maximal 80 % des Binders herkömmlicher Tonbinder ist.

**8.** Verfahren gemäss einem der vorangehenden Ansprüche, **dadurch gekennzeichnet, dass** der mindestens eine weitere Tonbinder in Mengen von maximal 70 % des Binders vorhanden ist.

**9.** Verfahren gemäss einem der vorangehenden Ansprüche, **dadurch gekennzeichnet, dass** der mindestens eine weitere Tonbinder ein dichter Attapulgit-Tonbinder mit einem Restwassergehalt von 20 bis 25% und einer Schüttdichte von 400 g/Liter bis 530 g/Liter ist.

**10.** Verfahren gemäss einem der vorangehenden Ansprüche, **dadurch gekennzeichnet, dass** beide Zeolithtypen 13X und LSX zu mindestens 70 %, vorzugsweise zu mindestens 90 % in der Natriumform vorliegen.

**11.** Verfahren gemäss Anspruch 10, **dadurch gekennzeichnet, dass** beide Zeolithtypen 13X und LSX im Maximum zu 30 %, vorzugsweise im Maximum zu 10 % in der Kaliumform vorliegen.

**12.** Verfahren gemäss einem der Ansprüche 1 bis 9, **dadurch gekennzeichnet, dass** beide Zeolithtypen 13X und LSX zu 60 bis 95 % in der Calciumform vorliegen, vorzugsweise zwischen 75 und 85%.

**13.** Verfahren gemäss einem der vorangehenden Ansprüche, **dadurch gekennzeichnet, dass** zur Mischung der Zeolithkristalle und des Binders ein porenformendes Mittel zugegeben wird.

**14.** Verfahren gemäss einem der vorangehenden Ansprüche, **dadurch gekennzeichnet, dass** das porenformende Mittel in einer Menge zugegeben wird, die bezogen auf das Fertigprodukt einer Menge zwischen 2 und 15 Gewichtsprozent entspricht.

**15.** Zeolithisches Adsorptionsmittel, **dadurch gekennzeichnet, dass** der Anteil des Binders im fertigen Adsorptionsmittel einen Anteil zwischen 2 und 30 Gewichtsprozent ausmacht und dass es erhältlich ist mittels des Verfahrens gemäss einem der vorangehenden Ansprüche.

**16.** Ein Verfahren, um eine oder mehrere Verunreinigungen aus einem Gasstrom zu entfernen, **dadurch gekennzeichnet, dass** der Gasstrom durch eine Schüttung des zeolithischen Adsorptionsmittel gemäss Anspruch 15 geleitet wird.

**17.** Verfahren gemäss Anspruch 16, **dadurch gekennzeichnet, dass** der Gasstrom ein Luftstrom ist und die Verunreinigung ausgewählt ist aus der Gruppe bestehend aus Kohlenstoffdioxid, Wasser, Lachgas, ein anderes anorganisches Gas, Kohlenwasserstoffe und Mischungen von zwei und mehreren dieser Stoffe.

**18.** Verfahren gemäss Anspruch 16 oder 17, **dadurch gekennzeichnet, dass** die Verunreinigung Kohlenstoffdioxid ist.

**19.** Verwendung eines zeolithischen Adsorptionsmittels gemäss Anspruch 15 zur Entfernung von Verunreinigungen, insbesondere Kohlenstoffdioxid, Wasser, Lachgas, ein anderes anorganisches Gas, Kohlenwasserstoffe und Mischungen von zwei und mehreren dieser Stoffe, aus einem Gasstrom, insbesondere einem Luftstrom.

**Claims**

**1.** A method for the production of shaped zeolites, **characterized by** the process steps

a) mixing of (i) at least one type of zeolite crystals from the faujasite family having an $SiO_2/Al_2O_3$ ratio of $\leq 3.0$ with (ii) finely divided attapulgite binder and at least one further clay binder, wherein the at least one further clay binder is any clay binder suitable for shaping zeolites and present in amounts of 10 to 90 % of the binder and (iii) addition of water,
or
mixing of (i) two types of zeolitecrystals from the faujasite family having an $SiO_2/Al_2O_3$ ratio of $\leq 3.0$, wherein the zeolite crystals from the faujasite family are zeolite LSX and zeolite 13X, wherein the zeolite types 13X and LSX are used in a ratio of 90 : 10 to 5 : 95, with (ii) finely divided attapulgite binder, or finely divided attapulgite binder and at least one further clay binder, and (iii) addition of water,
b) production of shaped zeolite bodies from the mixture prepared in step a),

c) drying and calcination of the zeolite bodies shaped in step b) in order to obtain the active adsorbent,

wherein the finely divided attapulgite binder is **characterized in that** it is a purified magnesium aluminium silicate comprising as dispering agent a sodium polyacrylate, has been made self-dispersing by chemical processes and the bulk density of which, measured according to EN ISO 787:1995D, is greater than 550 g/l.

2. The method of claim 1, **characterized in that** an ion exchange is effected after step c).

3. The method of claim 1 or 2, **characterized in that** the portion of the binder in the finished adsorbent accounts for a portion of between 2 and 30 percent by weight.

4. The method of claim 3, **characterized in that** the portion of the binder in the finished adsorbent accounts for a portion of between 5 and 20 percent by weight.

5. The method of one of the preceding claims, **characterized in that** the at least one type of zeolite crystalls from the faujasite family is zeolite LSX or zeolite LSX and zeolite 13 X.

6. The method of one of the preceding claims, **characterized in that** in method step a) (i) the zeolite crystals from the faujasite family are zeolite LSX and zeolite 13X, wherein the zeolite types 13X and LSX are used in a ratio of 90 : 10 to 5 : 95, and (ii) the binder is finely divided attapulgite binder and at least one further clay binder, wherein the at least one further clay binder is any clay binder suitable for shaping zeolites and present in amounts of 10 to 90 % of the binder.

7. The method of one of the preceding claims, **characterized in that** at most 80% of the binder is conventional clay binder.

8. The method of one of the preceding claims, **characterized in that** the at least one further clay binder is present in amounts of at most 70% of the binder.

9. The method of one of the preceding claims, **characterized in that** the at least one further clay binder is a dense attapulgite binder with a residual water content of 20 to 25 % and a bulk density of 400 g/liter to 530 g/liter.

10. The method of one of the preceding claims, **characterized in that** at least 70%, preferably at least 90%, of the two zeolite types 13X and LSX are present in the sodium form.

11. The method of claim 10, **characterized in that** at most 30%, preferably at most 10%, of the two zeolite types 13X and LSX are present in the potassium form.

12. The method of one of claims 1 to 9, **characterized in that** from 60 to 95%, preferably between 75 and 85%, of the two zeolite types 13X and LSX are present in the calcium form.

13. The method of one of the preceding claims, **characterized in that** a pore-forming agent is added to the mixture of the zeolite crystals and the binder.

14. The method of one of the preceding claims, **characterized in that** the pore-forming agent is added in an amount which corresponds to an amount between 2 and 15 percent by weight, based on the finished product.

15. A zeolitic adsorbent **characterized in that** the portion of the binder in the finished adsorbent is a portion of 2 to 30 % by weight and that it is obtainable by means of the method as claimed in any of the preceding claims.

16. A method for eliminating one or more impurities from a gas stream, **characterized in that** the gas stream is passed through a bed of the zeolitic adsorbent as claimed in claim 15.

17. The method of claim 16, **characterized in that** the gas stream is an air stream and the impurity is selected from the group consisting of carbon dioxide, water, nitrous oxide, another inorganic gas, hydrocarbons and mixtures of two or more of these substances.

18. The method of claim 16 or 17, **characterized in that** the impurity is carbon dioxide.

**19.** Use of a zeolitic adsorbent according to claim 15 for eliminating impurities, in particular carbon dioxide, water, nitrous oxide, another inorganic gas, hydrocarbons and mixtures of two or more of these substances from a gas stream, in particular an air stream.

**Revendications**

**1.** Procédé de préparation de zéolithes mises en forme, **caractérisé par** les stades de procédé, dans lesquels :

a) on mélange (i) au moins un type de cristaux de zéolithe de la famille de la faujasite ayant un rapport $SiO_2/Al_2O_3$ ≤ 3 à (ii) un liant d'attapulgite très dispersé et à au moins un autre liant d'argile, le au moins un autre liant d'argile étant un liant d'argile quelconque approprié pour la mise en forme de zéolithes et étant présent en des quantités de 10 à 90 % du liant et (iii) on ajoute de l'eau,
ou
on mélange (i) deux types de cristaux de zéolithe de la famille de la faujasite ayant un rapport $SiO_2/Al_2O_3$ ≤ 3, les cristaux de zéolithe de la famille de la faujasite étant une zéolithe LSX et une zéolithe 13X, les types 13X et LSX de zéolithe étant utilisés dans un rapport de 90:10 à 5:95 à (ii) un liant d'attapulgite très dispersé ou à un liant d'attapulgite très dispersé et au moins un autre liant d'argile et (iii) on ajoute de l'eau,
b) on prépare des corps de zéolithe mis en forme à partir du mélange préparé au stade a),
c) on sèche et on calcine les corps de zéolithe mis en forme au stade b) pour obtenir l'agent d'adsorption actif, dans lequel le liant d'attapulgite très dispersé est **caractérisé en ce que** c'est un silicate de magnésium et d'aluminium purifié qui contient du polyacrylate de sodium comme agent de dispersion, qui a été rendu autodispersant par des processus chimiques et dont la masse volumique apparente mesurée suivant EN ISO 787: 1995D est plus grande que 550 g/L.

**2.** Procédé suivant la revendication 1, **caractérisé en ce qu'**on effectue un échange d'ions après le stade c).

**3.** Procédé suivant la revendication 1 ou 2, **caractérisé en ce que** la proportion du liant dans l'agent d'adsorption fini représente une proportion comprise entre 2 et 30 pourcent en poids.

**4.** Procédé suivant la revendication 3, **caractérisé en ce que** la proportion du liant dans l'agent d'adsorption fini représente une proportion comprise entre 5 et 20 pourcent en poids.

**5.** Procédé suivant l'une des revendications précédentes, **caractérisé en ce que** le au moins un type de cristaux de zéolithe de la famille de la faujasite est la zéolithe LSX ou la zéolithe LSX et la zéolithe 13X.

**6.** Procédé suivant l'une des revendications précédentes, **caractérisé en ce que** dans le stade a) du procédé (i) les cristaux de zéolithe de la famille de la faujasite sont la zéolithe LSX et la zéolithe 13X, les types 13X et LSX de zéolithe étant utilisés dans un rapport de 90:10 à 5:95 et (ii) le liant est un liant d'attapulgite très dispersé et d'au moins un autre liant d'argile, le au moins un autre liant d'argile étant n'importe quel liant d'argile approprié pour la mise en forme de zéolithes et étant présent dans des quantités de 10 à 90 % du liant.

**7.** Procédé suivant l'une des revendications précédentes, **caractérisé en ce qu'**au maximum 80 % du liant est un liant d'argile habituel.

**8.** Procédé suivant l'une des revendications précédentes, **caractérisé en ce que** le au moins un autre liant d'argile est présent en des quantités d'au maximum 70 % du liant.

**9.** Procédé suivant l'une des revendications précédentes, **caractérisé en ce que** le au moins un autre liant d'argile est un liant d'argile-attapulgite ayant une teneur résiduelle en eau de 20 à 25 % et une masse volumique apparente de 400 g/litre à 530 g/litre.

**10.** Procédé suivant l'une des revendications précédentes, **caractérisé en ce que** les deux types de zéolithe 13X et LSX sont présents pour au moins 70 %, de préférence pour au moins 90 %, sous la forme sodique.

**11.** Procédé suivant la revendication 10, **caractérisé en ce que** les deux types 13X et LSX de zéolithe sont présents en un maximum de 30 %, de préférence en un maximum de 10 %, sous la forme potassique.

**12.** Procédé suivant l'une des revendications 1 à 9, **caractérisé en ce que** les deux types 13X et LSX de zéolithe sont présents pour 60 à 95 % sous la forme calcique, de préférence entre 75 et 85 %.

**13.** Procédé suivant l'une des revendications précédentes, **caractérisé en ce que**, pour le mélange des cristaux de zéolithe et du liant, on ajoute un agent porogène.

**14.** Procédé suivant l'une des revendications précédentes, **caractérisé en ce qu'**on ajoute l'agent porogène dans une quantité, qui, rapportée au produit fini, correspond à une quantité comprise entre 2 et 15 pourcent en poids.

**15.** Argent d'adsorption zéolithique, **caractérisé en ce que** la proportion du liant dans l'agent d'adsorption fini représente une proportion comprise entre 2 et 30 pourcent en poids et il peut être obtenu à l'aide d'un procédé suivant l'une des revendications précédentes.

**16.** Procédé pour éliminer une ou plusieurs impuretés d'un courant gazeux, **caractérisé en ce que** l'on fait passer le courant gazeux dans un amas d'agent d'adsorption zéolithique suivant la revendication 15.

**17.** Procédé suivant la revendication 16, **caractérisé en ce que** le courant gazeux est un courant d'air et l'impureté est choisie dans le groupe constitué du dioxyde de carbone, de l'eau, du gaz hilarant, d'un autre gaz minéral, d'hydrocarbures et de mélanges de deux ou plusieurs de ces substances.

**18.** Procédé suivant la revendication 16 ou 17, **caractérisé en ce que** l'impureté est du dioxyde de carbone.

**19.** Utilisation d'un agent d'adsorption zéolithique suivant la revendication 15, pour l'élimination d'impuretés, notamment du dioxyde de carbone, de l'eau, du gaz hilarant, d'un autre gaz minéral, d'hydrocarbures et de mélanges de deux ou plusieurs de ces substances, d'un courant gazeux, notamment d'un courant d'air.

## Durchbruchzeiten

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1055515
- US 20010049998 A
- EP 0940174 A
- US 5856264 A
- WO 03061820 A
- US 2882244 A
- GB 1051621 A
- US 3078639 A
- US 5531808 A

- WO 0001478 A
- WO 9946031 A
- WO 0124923 A
- WO 9614916 A
- EP 1092465 A
- US 6106593 A
- US 6130179 A
- EP 0930089 A

**In der Beschreibung aufgeführte Nicht-Patentliteratur**

- **H. Robson.** Verified syntheses of zeolitic materials. Elsevier, 2001, 150-151